# EUROPEAN PATENT APPLICATION

(11) **EP 4 679 561 A1**
(43) Date of publication of application: **14.01.2026**
(21) Application number: 25185674.6
(22) Date of filing: 26.06.2025
(51) Int. Cl.: H01M 10/48, H01M 50/204, H01M 50/293

(54) **METHOD AND SYSTEM FOR DESIGNING A BATTERY MODULE**

(30) Priority: 27.06.2024 KR 20240084797
(71) Applicant: SAMSUNG SDI CO., LTD., Yongin-si, Gyeonggi-do 17084 (KR)
(72) Inventor: OH, Seryong, 17084 Yongin-si (KR); LEE, Hyun-Ye, 17084 Yongin-si (KR)
(74) Representative: Marks & Clerk LLP

(57) **Abstract**

The present disclosure relates to a method and system for designing a battery module. The method of designing an optimal battery module may include: receiving target design information about a target battery module that includes a target battery cell; predicting aging of the target battery cell based on the target design information by using a cell aging prediction model that correlates a design of a battery module including a battery cell and aging of the battery cell; and determining whether the target design information is feasible based on the target design information and the predicted aging of the target battery cell.

## Description

### BACKGROUND

### Field

The present disclosure relates to a method and system for designing battery modules by using a cell aging prediction model in which the correlation between battery module design and aging of battery cells is modeled.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

As batteries including secondary cells become more energy-efficient and require fast charging, the aging of batteries is accelerating as battery usage continues. To slow down the aging rate of batteries, development of the materials included in batteries and also the systems and/or modules that include the batteries is becoming important. However, the determination of battery aging rates requires a lot of time, cost, and manpower.

The above information disclosed in this Background section is for enhancement of understanding of the background of the present disclosure, and therefore, it may contain information that does not constitute related (or prior) art.

### SUMMARY

The present disclosure provides a method for estimating the negative electrode safety of a battery and a battery system using the same.

These and other aspects and features of the present disclosure will be described in or will be apparent from the following description of embodiments of the present disclosure.

According to an embodiment of the present disclosure, a method for designing a battery module may include: receiving target design information about a target battery module that includes a target battery cell; predicting aging of the target battery cell based on the target design information by using a cell aging prediction model that correlates a design of a battery module including a battery cell and aging of the battery cell; and determining whether the target design information is feasible based on the target design information and the predicted aging of the target battery cell.

According to an embodiment of the present disclosure, the target design information may include cell specification information about the target battery cell and module specification information about the target battery module; and determining whether the target design information is feasible may include calculating the size of a target breathing space based on the cell specification information and the module specification information, and determining whether the target design information is feasible based on the size of the target breathing space and the predicted aging of the target battery cell.

According to an embodiment of the present disclosure, the target design information may further include target aging information about the target battery cell; and determining whether the target design information is feasible based on the size of the target breathing space and the predicted aging of the battery cell may include determining whether the target design information is feasible based on the size of the target breathing space, the target aging information, and the predicted aging of the target battery cell.

According to an embodiment of the present disclosure, determining whether the target design information is feasible based on the size of the target breathing space, the target aging information, and the predicted aging of the target battery cell may include: generating a first comparison result by comparing the size of the breathing space associated with the predicted aging of the target battery cell and the size of the target breathing space; generating a second comparison result by comparing the target aging information with the predicted aging of the target battery cell; and determining whether the target design information is feasible based on the first comparison result and the second comparison result.

According to an embodiment of the present disclosure, the method may further include: receiving experimental design data and charge/discharge data of an experimental battery cell corresponding to the experimental design data, wherein the experimental design data represents a design environment for an experimental battery module including the experimental battery cell; and generating the cell aging prediction model based on the experimental design data and the charge/discharge data.

According to an embodiment of the present disclosure, the experimental design data may include parameters affecting the lifespan of the experimental battery cell; and the parameters may include control parameters that are adjusted in the design environment and operating parameters that are dependent on the control parameters.

According to an embodiment of the present disclosure, the control parameters may include information related to at least one of the stiffness of an end plate of the experimental battery module, a compression force, and the thickness of a thermal insulator of the experimental battery module.

According to an embodiment of the present disclosure, the operating parameters may include information related to at least one of a swelling force of the experimental battery module, DC internal resistance of the experimental battery cell, DC internal resistance of the experimental battery module, a temperature deviation of the experimental battery cell, and a temperature deviation of the experimental battery module.

According to an embodiment of the present disclosure, the control parameters and the operating parameters may be distinguished based on the degree to which they affect the lifespan of the experimental battery cell.

According to an embodiment of the present disclosure, generating the cell aging prediction model may include calculating aging information of the experimental battery cell according to the control parameters based on the charge/discharge data.

According to an embodiment of the present disclosure, generating the cell aging prediction model may include: calculating the size of a breathing space of the experimental battery cell according to the control parameters based on the charge/discharge data; and calculating the correlation between the size of the breathing space of the experimental battery cell and the aging information of the experimental battery cell.

According to an embodiment of the present disclosure, the charge/discharge data may be generated by experimental equipment, and the experimental equipment may include: a receiving part to accommodate the experimental battery cell; a compression adjustment unit to control a compression force applied to the experimental battery cell; a stiffness adjustment unit to control the stiffness of opposite ends of the experimental battery cell; and a thickness measurement unit to measure a thickness change of the experimental battery cell.

According to an embodiment of the present disclosure, the predicted aging of the target battery cell may include state-of-health (SOH) information of the target battery cell that has undergone charge/discharge cycles.

According to an embodiment of the present disclosure, the size of the target breathing space may be associated with a degree of expansion of the target battery cell as it is charged and discharged.

A battery module designed using an optimal battery module design method according to an embodiment of the present disclosure may be provided.

According to an embodiment of the present disclosure for solving the above technical problem, a system for designing an optimal battery module may include at least one processor configured to read out and execute instructions stored in the at least one memory to thereby cause the system to function as: a target information receiver configured to receive target design information about a target battery module including a target battery cell; a battery aging predictor configured to predict aging of the target battery cell based on the target design information by using a cell aging prediction model that correlates a design of a battery module including a battery cell and aging of the battery cell; and a determination part configured to determine whether the target design information is feasible based on the target design information and the predicted aging of the target battery cell.

According to an embodiment of the present disclosure, the target design information may include cell specification information about the target battery cell and module specification information about the target battery module; and the determination part may be further configured to calculate the size of a target breathing space based on the cell specification information and the module specification information, and the determination part is configured to determine whether the target design information is feasible based on the size of the target breathing space and the predicted aging of the target battery cell.

According to an embodiment of the present disclosure, the target design information may further include target aging information about the target battery cell; and determining whether the target design information is feasible based on the size of the target breathing space and the predicted aging of the target battery cell may include determining whether the target design information is feasible based on the size of the target breathing space, the target aging information, and the predicted aging of the target battery cell.

According to an embodiment of the present disclosure, determining whether the target design information is feasible may include: generating a first comparison result by comparing the size of the breathing space associated with the predicted aging of the target battery cell and the size of the target breathing space; generating a second comparison result by comparing the target aging information with the predicted aging of the target battery cell; and determining whether the target design information is feasible based on the first comparison result and the second comparison result.

According to an embodiment of the present disclosure, the system may further include: an experimental data receiver configured to receive experimental design data and charge/discharge data of an experimental battery cell corresponding to the experimental design data, wherein the experimental design data represents a design environment for an experimental battery module including the experimental battery cell; and an aging prediction model generator configured to generate the cell aging prediction model based on the experimental design data and the charge/discharge data.

According to various embodiments of the present disclosure, it is possible to identify whether a battery module is feasible without actually manufacturing the battery module, thereby reducing the cost of manufacturing the battery module. In addition, the risk of having to redesign a battery module may be reduced by identifying the suitability of the design in advance from the early stage of the battery module design.

According to various embodiments of the present disclosure, it is possible to obtain charge/discharge data for a battery cell having a design environment corresponding to the parameters by using experimental equipment without directly implementing the design environment as a battery module such that the cost of manufacturing a battery module may be reduced.

According to various embodiments of the present disclosure, charge/discharge data of an experimental battery cell may be obtained by using experimental equipment while easily controlling factors that apply mechanical stress to the experimental battery cell.

According to various embodiments of the present disclosure, it is possible predict aging of a battery according to the size of a breathing space of the battery cell when the design environment for a battery module is adjusted.

According to various embodiments of the present disclosure, by inputting target design information through an optimal battery module design interface and comparing target aging information with predicted aging information, it is possible to easily determine whether the target design information is actually feasible. In addition, by changing and inputting target design information, it is possible to determine whether various target design information is actually feasible, and to obtain optimal battery module design information among various pieces of target design information.

However, aspects and features of the present disclosure are not limited to those described above, and other aspects and features not mentioned will be clearly understood by a person skilled in the art from the detailed description provided below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure is not limited to the drawings.
FIG. 1 is a schematic diagram of an optimal battery module design system according to an embodiment of the present disclosure.
FIG. 2 is a schematic diagram of an optimal battery module design system according to an embodiment of the present disclosure.
FIG. 3 is a diagram showing an example of a battery cell according to an embodiment of the present disclosure.
FIG. 4 is a diagram showing an example of a battery module according to an embodiment of the present disclosure.
FIG. 5 is a flowchart illustrating an example of an optimal battery module design method according to an embodiment of the present disclosure.
FIG. 6 is a flowchart illustrating an example of a method for generating charge/discharge data of an experimental battery cell according to an embodiment of the present disclosure.
FIG. 7 is a diagram showing an example of a battery module according to an embodiment of the present disclosure.
FIG. 8 is a perspective view of an experiment equipment according to an embodiment of the present disclosure.
FIG. 9 is a top view of the experiment equipment according to an embodiment of the present disclosure.
FIG. 10 is a side view of the experiment equipment according to an embodiment of the present disclosure.
FIG. 11 is a graph and table illustrating control parameters in multiple experimental examples of the present disclosure.
FIG. 12 is a table illustrating experiment results for multiple experimental examples of the present disclosure.
FIG. 13 is a graph showing the correlation between battery aging information and breathing space size.
FIG. 14 is a detailed flowchart of a step for determining whether target design information is feasible according to an embodiment of the present disclosure.
FIG. 15 is a diagram illustrating an example of an optimal battery module design interface according to an embodiment of the present disclosure.

### DETAILED DESCRIPTION

Hereinafter, embodiments of the present disclosure will be described, in detail, with reference to the accompanying drawings.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

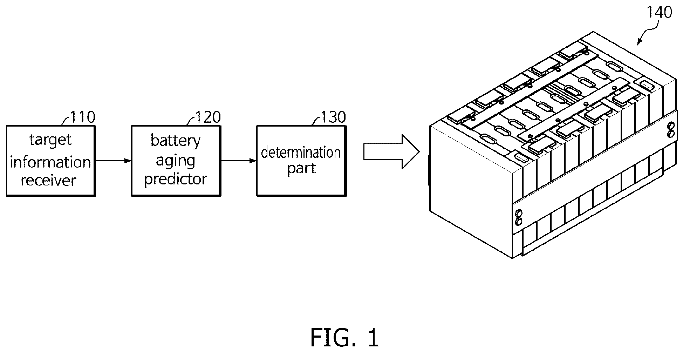

FIG. 1 is a schematic diagram of an optimal battery module design system according to an embodiment of the present disclosure. The optimal battery module design system may include a target information receiver 110, a battery aging predictor 120, and a determination part 130.

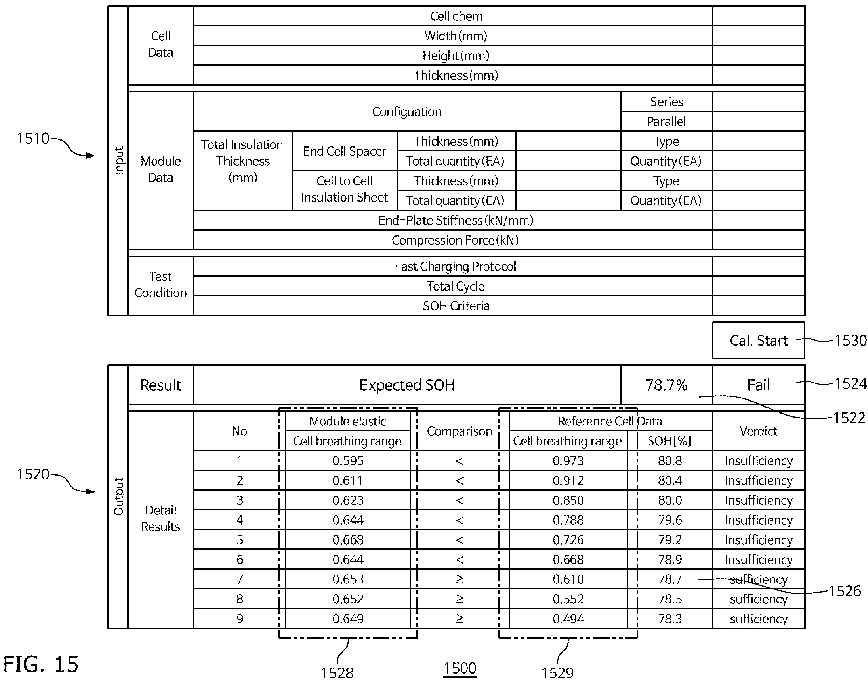

In an embodiment, the target information receiver 110 may receive target design information for a target battery module 140 including a target battery cell. The target battery cell is a battery cell (hereinafter, may be referred to as "cell") that is a target of the determination, the target battery module 140 is a battery module (hereinafter, may be referred to as "module") that is a target of the determination, and the target design information may include information about design environments, conditions, or the like for implementing the target battery module 140. For example, the target design information may include cell specification information for a target battery cell and module specification information for a target battery module. The cell specification information may include information about the type of material, size, thickness, or the like of the cell, and the module specification information may include information about the type and thickness of a thermal insulator included in the module, the stiffness of a plate included in the module, or the like. The cell specification information and module specification information will be described in detail with reference to FIG. 15.

The target information receiver 110 may receive target design information input through a target information input interface. For example, the user may input target design information through the target information input interface, and the target information receiver 110 may receive the input target design information. The target information input interface is described in detail with reference to FIG. 15. Additionally or alternatively, the target information receiver 110 may communicate with other systems and/or devices to receive target design information. The target information receiver 110 may transfer the target design information to the battery aging predictor 120.

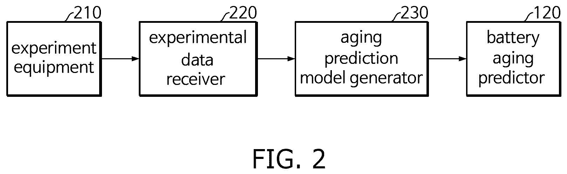

The battery aging predictor 120 may receive target design information and predict aging of a target battery cell by using a cell aging prediction model based on the target design information. The cell aging prediction model may be a model that correlates the design of a battery module including battery cells and the aging of the battery cells. The cell aging information may indicate the capacity status of the battery after repeated charge/discharge cycles. For example, the cell aging information may include state-of-health (SOH) information of a battery cell that has undergone a preset number of charge/discharge cycles. A method for generating a cell aging prediction model is described in detail with reference to FIG. 2.

In an embodiment, the aging information of the target battery cell may be associated with the size of a target breathing space. Here, the size of the breathing space may be related to the degree of expansion of the battery cell as the battery cell is charged and discharged. For example, when the battery cell expands and contracts as it is repeatedly charged and discharged, the breathing space size may represent the change between the thickness of the expanded battery cell and the thickness of the contracted battery cell. The target breathing space size may indicate the breathing space size desired for the target battery cell. That is, the cell aging prediction model may predict aging information according to the size of the breathing space of the target battery cell based on the target design information.

The determination part 130 may receive target design information and predicted aging information. The determination part 130 may determine whether the target design information is feasible based on the target design information and the predicted aging information. Specifically, the determination part 130 may calculate the size of the target breathing space based on the cell specification information and module specification information included in the target design information. The determination part 130 may determine whether the target design information is feasible based on the size of the target breathing space and the predicted aging information.

In an embodiment, the target design information may further include target aging information for the target battery cell. The target aging information may indicate the aging information desired for the target battery cell. The determination part 130 may determine whether the target design information is feasible based on the size of the target breathing space, the target aging information, and the predicted aging information. Specifically, the determination part 130 may generate a first comparison result by comparing the size of the breathing space associated with the predicted aging information and the size of the target breathing space. The determination part 130 may compare the target aging information with the predicted aging information to generate a second comparison result. The determination part 130 may determine whether the target design information is feasible based on the first comparison result and the second comparison result.

In an embodiment, the determination part 130 may determine the target design information to be an optimal design in response to determining that the target design information is feasible. In addition, the determination part 130 may change the target design information in response to determining that the target design information is not feasible. The changed target design information may be input to the target information receiver 110 so that the optimal battery module design method according to an embodiment of the present disclosure may be performed again.

The user who has been provided with the optimal design information determined by the determination part 130 and/or the determination result of the determination part 130 may implement the target battery module 140 based on the determination result. Specifically, the user may manufacture a battery module including the target battery cell based on the target design information. When the battery module ages with repeated charge/discharge cycles, the actual aging degree of the battery module may be substantially identical or similar to the aging information predicted by the battery aging predictor 120.

As described above, by inputting target design information for the target battery module into the optimal battery module design system before actually manufacturing the battery cell and battery module, the feasibility of the target design information may be output. That is, since it is possible to know whether a battery module is feasible without actually manufacturing the battery module, the cost of manufacturing the battery module or the like may be reduced. In addition, the risk of redesigning the battery module may be reduced by determining the suitability of the design in advance from the early stage of the battery module design.

FIG. 2 is a schematic diagram of an optimal battery module design system according to an embodiment of the present disclosure. The optimal battery module design system (e.g., battery module design system described with reference to FIG. 1) may include an experiment equipment 210, an experimental data receiver 220, an aging prediction model generator 230, and a battery aging predictor 120.

The experiment equipment 210 may generate charge/discharge data for the experimental battery cell. For example, it may measure the SOH of the experimental battery cell while repeating the charge/discharge cycle for the experimental battery cell. The experiment equipment 210 may measure the SOH of the experimental battery cell while adjusting the design environment for the experimental battery cell.

In an embodiment, the experiment equipment 210 may adjust the design environment of the experimental battery cell in response to experimental design data. The experimental design data may indicate a design environment for an experimental battery module including an experimental battery cell. For example, the experimental design data may include parameters that affect the experimental battery cell. Here, the experimental battery module may be a virtual battery module that can be implemented with experimental design data, and it may be assumed that the experimental battery module is in a state of accommodating an experimental battery cell.

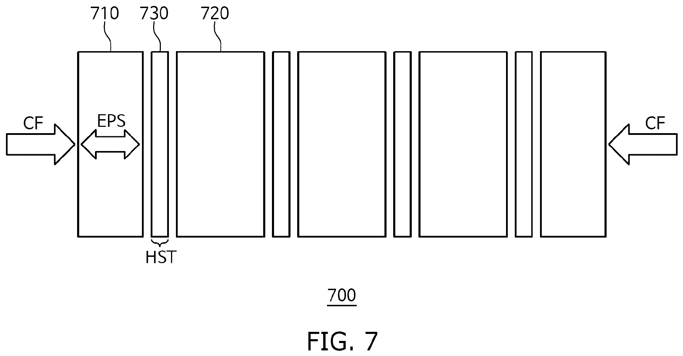

In an embodiment, the parameters may include control parameters that may be adjusted in the design environment and operating parameters that depend on the control parameters. The control parameters may include, for example, information associated with at least one of the stiffness of the end plate of the experimental battery module, the compression force of the end plate, or the thickness of the thermal insulator of the experimental battery module. The operating parameters may include, for example, information associated with at least one of the swelling force of the experimental battery module, the DC internal resistance of the experimental battery cell, the temperature deviation of the experimental battery cell (here, the temperature deviation includes a temperature deviation occurring inside the experimental battery cell and a temperature deviation for each of plural experimental battery cells), or the temperature deviation of the experimental battery module. Control and operating parameters are described in detail with reference to FIG. 7.

The experiment equipment 210 may include components for adjusting the design environment of the battery cell. For example, the experiment equipment 210 may include a receiving part that receives a battery cell, a compression adjustment unit that adjusts the compression force applied to the battery cell, a stiffness adjustment unit that adjusts the stiffness of both ends of the battery cell, and a thickness measurement unit that measures the thickness change of the experimental battery cell. The configuration and structure of the experiment equipment 210 are described in detail with reference to FIG. 7.

The experimental data receiver 220 may receive charge/discharge data generated by the experiment equipment 210. In addition, the experimental data receiver 220 may receive experimental design data. The experimental design data may be input by the user or generated by the experiment equipment 210. For example, when the design environment of a battery cell is changed by adjustment of a component included in the experiment equipment 210, the information corresponding to the changed design environment may be generated as experimental design data.

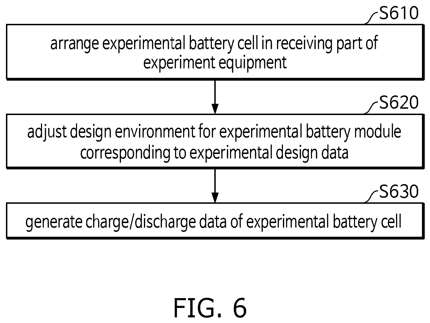

The aging prediction model generator 230 may receive charge/discharge data and experimental design data. The aging prediction model generator 230 may generate a cell aging prediction model based on the experimental design data and the charge/discharge data. Specifically, the aging prediction model generator 230 may produce aging information of the experimental battery cell according to a control parameter on the basis of the charge/discharge data. The aging prediction model generator 230 may calculate the size of the breathing space of the experimental battery cell according to the control parameter on the basis of the charge/discharge data. The aging prediction model generator 230 may calculate the correlation between the breathing space size of the experimental battery cell and the aging information of the experimental battery cell. The aging prediction model generator 230 may generate a cell aging prediction model in which the correlation with the aging information of the battery cell according to the experimental design data is modeled. Here, the aging information of the battery cell may also have a correlation with the breathing space of the battery cell. The process of generating the aging prediction model is described in detail with reference to FIGS. 6 to 13.

The aging prediction model generator 230 may transfer the generated cell aging prediction model to the battery aging predictor 120. As described with reference to FIG. 1, the battery aging predictor 120 may predict the aging information of a target battery cell based on the target design information by using a cell aging prediction model.

In an embodiment, the optimal battery module design system may include a memory and a processor. With reference to FIGS. 1 and 2, the optimal battery module design system may include the target information receiver 110, the battery aging predictor 120, the determination part 130, the experiment equipment 210, the experimental data receiver 220, and the aging prediction model generator 230. In this case, at least some of the multiple components included in the optimal battery module design system may include a memory and a processor.

The memory may include any non-transitory computer-readable recording medium. According to an embodiment, the memory may include a random access memory (RAM) and a permanent mass storage device such as read only memory (ROM), disk drive, solid state drive (SSD), or flash memory. As another example, a permanent mass storage device such as ROM, SSD, flash memory, or disk drive may be included in the optimal battery module design system as a separate permanent storage device that is distinct from the memory. In addition, the memory may store an operating system and at least one program code (e.g., code installed in the optimal battery module design system for determining whether target design information is feasible).

The processor may be configured to process instructions of a computer program by executing basic arithmetic, logic, and input/output operations. The instructions may be provided to the experiment equipment 210, an external device, or external system by the memory or communication module. For example, the processor may use a cell aging prediction model to predict aging information of the target battery cell based on the target design information. The processor may determine whether the target design information is feasible based on the target design information and the predicted aging information.

Additionally, the optimal battery module design system may further include a communication module. The communication module may provide a configuration or function for communicating with the experiment equipment 210, or the like, and may provide a configuration or function for the optimal battery module design system to communicate with an external device, an external system, or the like. For example, control signals, commands, data, or the like provided under the control of the processor of the optimal battery module design system may be transmitted through the communication module to a charging apparatus, an external device, and/or an external system via communication modules of the experiment equipment 210, external device, and/or external system.

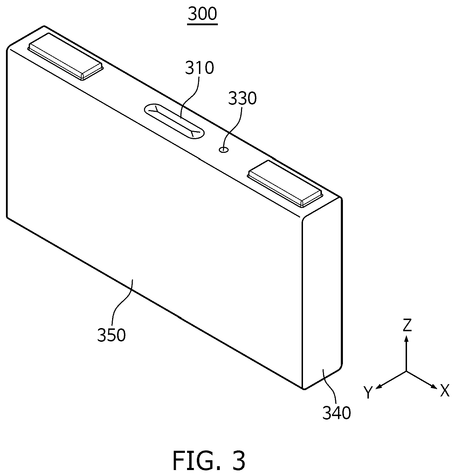

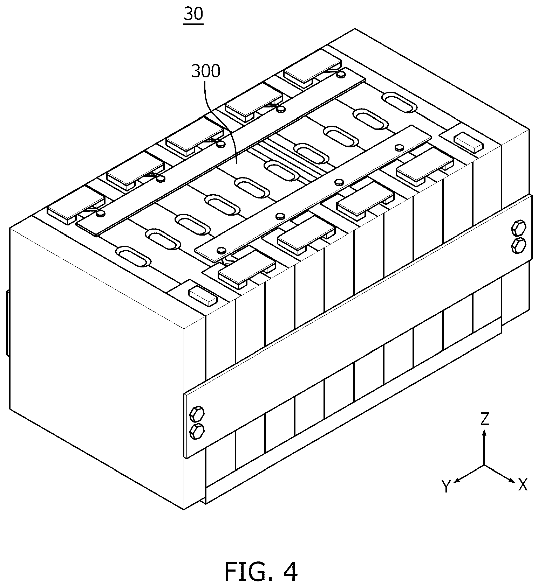

FIG. 3 is a diagram showing an example of a battery cell 300 according to an embodiment of the present disclosure. FIG. 4 is a diagram showing an example of a battery module 30 according to an embodiment of the present disclosure. With reference to FIG. 3, the battery cell 300 may include an electrode assembly (not shown), a vent portion 310, an electrolyte injection hole 330, a first terminal, a second terminal, a short side wall 340, and a long side wall 350.

The electrode assembly may be formed by winding or laminating a stack of a first electrode plate, a separator, and a second electrode plate formed in a thin plate or film shape. When the electrode assembly is a wound stack, the winding axis may be parallel to the length direction of the case. In addition, the electrode assembly may be a stack type other than a winding type. As such, the present disclosure does not limit the shape of the electrode assembly. Further, the electrode assembly may be a Z-stack electrode assembly in which a positive electrode plate and a negative electrode plate are inserted on both sides of a separator bent in Z stack. The first electrode plate of the electrode assembly may act as a negative electrode, and the second electrode plate may act as a positive electrode. Obviously, the opposite is also possible. Those skilled in the art will recognize the different types of configurations of electrode assemblies that may be used in embodiments of the present disclosure.

A first electrode tab of the first electrode plate and a second electrode tab of the second electrode plate may be positioned at opposite ends of the electrode assembly. In some examples, the electrode assembly may be accommodated together with an electrolyte in the case of a battery cell 300. In addition, in the electrode assembly, a first current collector and a second current collector may be connected to the first electrode tab of the first electrode plate and the second electrode tab of the second electrode plate, which are exposed on both sides of the electrode assembly, through welding and connection.

The vent portion 310 may be positioned at an upper part of the battery cell 300. The vent portion 310 may prevent an explosion of a secondary cell or an exothermic chain reaction of secondary cells arranged closely together. The electrolyte injection hole 330 may be formed on the upper surface of the case of the battery cell 300. The electrolyte may be injected into the case through the electrolyte injection hole 330.

As shown in the figures, a first direction X may refer to the X-axis direction. A second direction Y may be orthogonal to the first direction X. The second direction Y may refer to the Y-axis direction. A third direction Z may be orthogonal to both of the first direction X and the second direction Y. The third direction Z may refer to the Z-axis direction.

The long side wall 350 may include a first long side wall and a second long side wall. The first long side wall and the second long side wall may face each other. The first side wall and the second side wall may be spaced apart from each other while facing each other in the second direction Y.

The short side wall 340 may include a first short side wall and a second short side wall. The first short side wall and the second short side wall may face each other. That is, the first short side wall and the second short side wall may be spaced apart from each other while facing each other in the first direction X. The areas of the first short side wall and the second short side wall may be smaller than the areas of the first long side wall and the second long side wall.

In FIG. 3, the battery cell 300 is shown in the shape of a prismatic secondary cell, but this is only one example, and the present disclosure is not limited to a prismatic secondary cell. For example, the battery cell 300 may be a cylindrical secondary cell, a coin-shaped secondary cell, or a side terminal secondary cell.

With reference to FIG. 4, the battery module 30 includes an electrode section having a plurality of battery cells 300 arranged in the second direction Y, a connection tab connecting adjacent battery cells 300, and a protection circuit module having one end portion connected to the connection tab. The protection circuit module may be a battery management system (BMS). In addition, the connection tab includes a body that contacts the electrode section between adjacent battery cells and an extension that is extended from the body and is connected to the protection circuit module. The connection tab may be a bus bar.

It should be understood that the battery module 30 shown in FIG. 4 is only illustrative of one example of the present disclosure. The battery module 30 may include more or fewer cells than as is illustrated. Additionally, one or more columns having one or more cells in the first direction X may be further arranged in the battery module 30. In addition, the battery module 30 may be a battery pack in which one or more battery modules are combined.

For a target battery module including a target battery cell, aging information of the target battery cell may be predicted based on target design information, and whether the target design information is feasible may be determined based on the target design information and the predicted aging information will now be described.

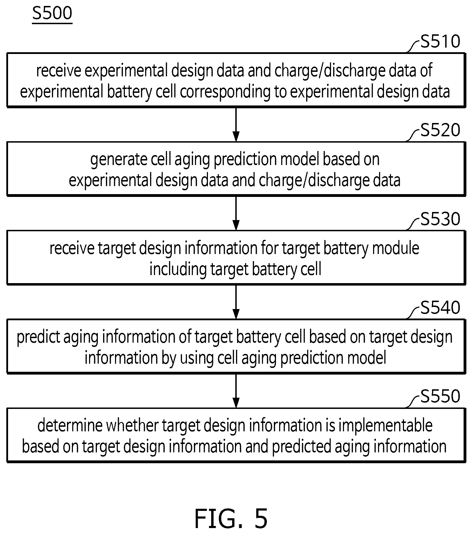

FIG. 5 is a flowchart illustrating an example of an optimal battery module design method S500 according to an embodiment of the present disclosure.

The optimal battery module design method S500 may be performed using the optimal battery module design system. Here, the optimal battery module design system may include a target information receiver (target information receiver 110 in FIG. 1), a battery aging predictor (battery aging predictor 120 in FIG. 1), a determination part (determination part 130 in FIG. 1), an experiment equipment (experiment equipment 210 in FIG. 2), an experimental data receiver (experimental data receiver 220 in FIG. 2), and an aging prediction model generator (aging prediction model generator 230 in FIG. 2).

First, the experimental data receiver may receive experimental design data and charge/discharge data of an experimental battery cell corresponding to the experimental design data (S510). Here, the experimental design data may indicate a design environment for the experimental battery module including an experimental battery cell. The experimental design data may include, for example, parameters that affect the lifespan of the experimental battery cell, and the parameters may include control parameters that are adjusted in the design environment and operating parameters that are dependent on the control parameters.

In an embodiment, the control parameter and the operating parameter may be distinguished based on the degree to which they affect the lifespan of the experimental battery cell. For example, the control parameters may include information associated with at least one of the stiffness of the end plate of the experimental battery module, the compression force of the end plate, or the thickness of the thermal insulator of the experimental battery module. The operating parameters may include information associated with at least one of the swelling force of the experimental battery module, the DC internal resistance of the experimental battery cell, the DC internal resistance of the experimental battery module, the temperature deviation of the experimental battery cell, or the temperature deviation of the experimental battery module.

In an embodiment, the aging prediction model generator may generate a cell aging prediction model based on the experimental design data and the charge/discharge data (S520). Specifically, the aging prediction model generator may produce aging information of the experimental battery cell according to the control parameters based on the charge/discharge data. The aging prediction model generator may calculate the size of the breathing space of the experimental battery cell according to the control parameters on the basis of the charge/discharge data. Here, the size of the target breathing space may be related to the degree of expansion of the target battery cell as it is charged and discharged. The aging prediction model generator may also calculate a correlation between the breathing space size of the experimental battery cell and the aging information of the experimental battery cell. Here, the aging information may include state-of-health (SOH) information of the target battery cell that has undergone a preset number of charge/discharge cycles.

In an embodiment, the charge/discharge data may be generated by the experiment equipment. The experiment equipment may include a receiving part that receives an experimental battery cell, a compression adjustment unit that adjusts the compression force applied to the experimental battery cell, a stiffness adjustment unit that adjusts the stiffness of both ends of the experimental battery cell, and a thickness measurement unit that measures the thickness change of the experimental battery cell.

The target information receiver may receive target design information for a target battery module including a target battery cell (S530). The target design information may include, for example, cell specification information for the target battery cell and module specification information for the target battery module. In addition, the target design information may further include target aging information for the target battery cell.

The battery aging predictor may utilize a cell aging prediction model in which the correlation between the design of the battery module including a battery cell and the aging of the battery cell is modeled to predict aging information of the target battery cell based on the target design information (S540).

The determination part may determine whether the target design information is feasible based on the target design information and the predicted aging information (S550). Specifically, the determination part may calculate the size of the target breathing space based on the cell specification information and the module specification information. The determination part may determine whether the target design information is feasible based on the size of the target breathing space and the predicted aging information.

The determination part may determine whether the target design information is feasible based on the size of the target breathing space, the target aging information, and the predicted aging information. For example, the determination part may generate a first comparison result by comparing the size of the breathing space associated with the aging information and the size of the target breathing space. The determination part may also compare the target aging information with the predicted aging information to generate a second comparison result. The determination part may determine whether the target design information is feasible based on the first comparison result and the second comparison result.

In embodiments of the present disclosure, a battery module designed using the optimal battery module design method of the present disclosure may be provided.

FIG. 6 is a flowchart illustrating an example of a method of generating charge/discharge data of an experimental battery cell according to an embodiment of the present disclosure. The experiment equipment (e.g., experiment equipment 210 in FIG. 2) may generate charge/discharge data of the experimental battery cell. The method of generating charge/discharge data of the experimental battery cell may be performed before the step (e.g., S510 in FIG. 5) in which the target information receiver (e.g., target information receiver 110 in FIG. 1) receives charge/discharge data of an experimental battery cell.

The method of generating charge/discharge data of an experimental battery cell may be initiated by arranging an experimental battery cell in the receiving part of the experiment equipment (S610). One or more experimental battery cells may be arranged in the receiving part of the experiment equipment. The arrangement of the experimental battery cell in the receiving part may simulate the arrangement of a battery cell in the battery module.

The design environment for the experimental battery module corresponding to the experimental design data may be adjusted (S620). For example, the design environment for the experimental battery module may be adjusted by using the compression adjustment unit, stiffness adjustment unit, and thickness adjustment unit included in the experiment equipment.

In embodiments, the experimental design data may include parameters that affect the lifespan of the experimental battery cell. Here, the parameters may include control parameters that are adjusted in the design environment for the experimental battery module and operating parameters that are dependent on the control parameters. The criteria for distinguishing a control parameter and an operating parameter are described in detail with reference to FIG. 7.

The experiment equipment may generate charge/discharge data of the experimental battery cell (S630). Specifically, the experiment equipment may measure the SOH of the experimental battery cell by repeating the charge/discharge cycle for the experimental battery cell. For example, the experiment equipment may measure the SOH of the experimental battery cell on every charge/discharge cycle. The SOH may be measured by continuously measuring the capacity of the experimental battery cell and calculating the SOH of the experimental battery cell based on the measured capacity.

FIG. 7 is a diagram showing an example of a battery module 700 according to an embodiment of the present disclosure. The battery module 700 in FIG. 7 is a simplified representation of a part of the interior of the battery module 30 in FIG. 4, with the battery module 700 being viewed from its side. Parameters that affect the lifespan of a battery cell will be described with reference to FIG. 7.

In an embodiment, end plates 710 may be formed at both ends of the battery module 700. One or more battery cells 720 may be accommodated between the end plates 710 at both ends. For example, the long side wall of the battery cell 720 and the end plate 710 may face each other. The battery module 700 may include a thermal insulator 730 interposed between the end plate 710 and the battery cell 720. Or, the thermal insulator 730 may be interposed between the battery cells 720. The thermal insulator 730 may face the long side wall of the battery cell 720.

The lifespan of the battery cell 720 may decrease as charging and discharging are repeated. That is, the battery cell 720 may age with the charging and discharging process. Thus, the SOH of the battery cell 720 may decrease as charging and discharging are repeated. But, depending on the design environment of the battery module 700 including the battery cell 720, the aging rate of the battery cell 720 may be accelerated or slowed down. In other words, as the design environment corresponding to the parameters affecting the lifespan of the battery cell 720 is adjusted, the aging rate of the battery cell 720 may be accelerated or slowed down.

The parameters affecting the aging rate of the battery cell 720 may be related to the design environment of the battery module 700. For example, the parameters may include the stiffness of the end plate (EPS), the compression force (CF), the thickness of the thermal insulator (HST), the swelling force of the battery module 700, the DC internal resistance of the battery cell 720, the DC internal resistance of the battery module 700, the temperature deviation of the battery cell 720, the temperature deviation of the battery module 700, and the like.

When the battery cell 720 is subjected to mechanical stress, the aging rate of the battery cell 720 may decrease. If relatively strong pressure is applied to the battery cell 720, the battery cell 720, which expands and contracts as it is charged and discharged, may not expand and contract smoothly, which may accelerate the deterioration rate of the battery cell 720. Conversely, if relatively weak pressure is applied to the battery cell 720, the gas generated inside the battery cell 720 may increase, which may increase the internal resistance of the battery cell 720. Thus, the parameters associated the mechanical stress applied to the battery cell 720 may have a significant impact on the lifespan of the battery cell 720.

Among the parameters related to the mechanical stress on the battery cell 720, the stiffness of the end plate (EPS), the compression force (CF), the thickness of the thermal insulator (HST), and the like may have a large effect on the lifespan of the battery cell 720. These parameters may be referred to as control parameters. The parameters other than the control parameters may be referred to as operating parameters.

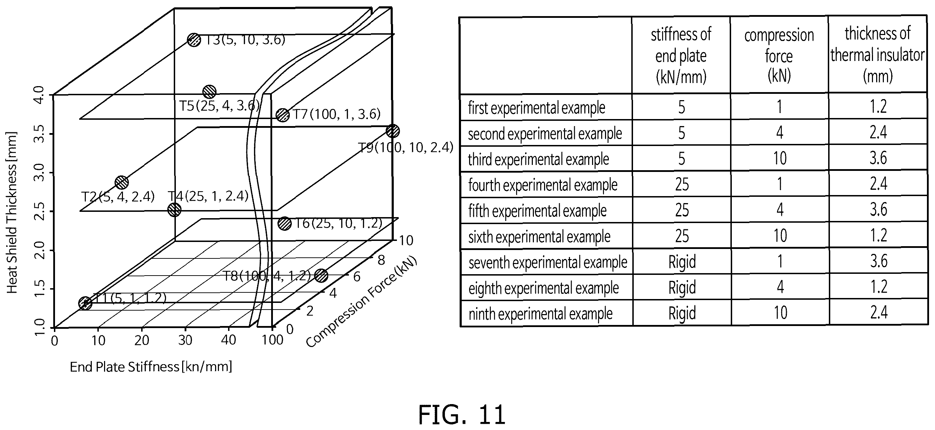

When generating charge/discharge data for the experimental battery cell, the charge/discharge data may be generated by adjusting the design environment corresponding to the control parameters. By adjusting the design environment corresponding to the control parameters, the degree of aging of the experimental battery cell resulting from the control parameters may be determined. Experimental design data with adjusted control parameters is described in detail below with reference to FIG. 11.

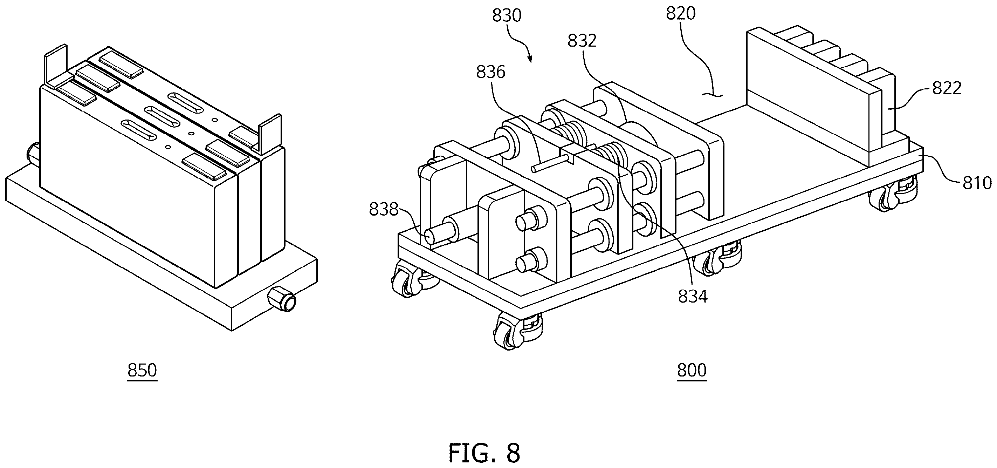

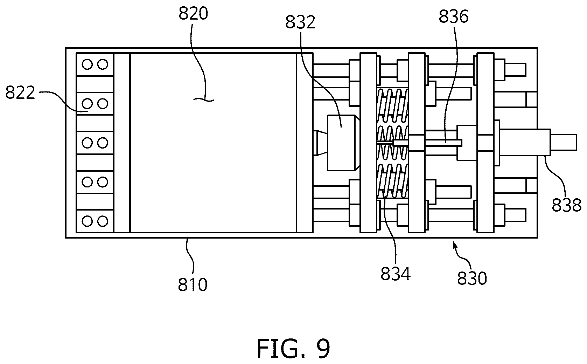

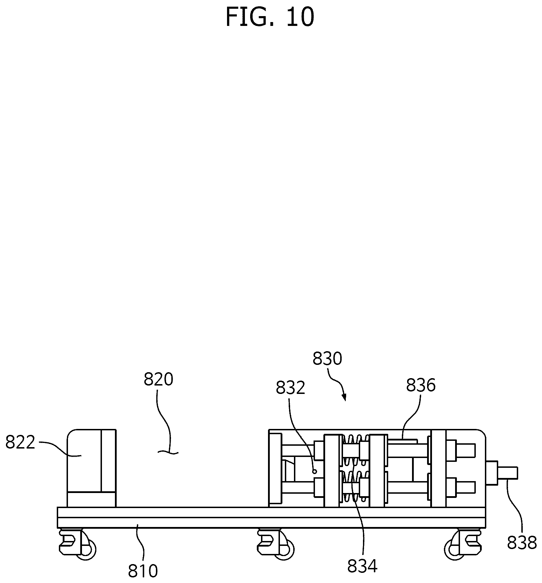

FIG. 8 is a perspective view of an experiment equipment 800 according to an embodiment of the present disclosure. FIG. 9 is a top view of the experiment equipment 800Z, and FIG. 10 is a side view of the experiment equipment 800.

The experiment equipment 800 may include a bottom part 810, a receiving part 820, and a design adjustment part 830. The bottom part 810 may be the body of the experiment equipment 800, and other components of the experiment equipment 800 may be disposed on the bottom part 810. Wheels or the like may be formed on the lower surface of the bottom part 810 to facilitate movement of the experiment equipment 800.

The receiving part 820 may be formed between the fixing part 822 and the design adjustment part 830. The fixing part 822 may be fixed on the bottom part 810. The receiving part 820 may receive the experimental battery cell 850. The fixing part 822 may support the experimental battery cell 850 so that the experimental battery cell 850 cannot move. In FIG. 8, the fixing part 822 is shown as supporting the long side wall of the experimental battery cell 850, but the fixing part 822 may support the short side wall of the experimental battery cell 850.

The experimental battery cell 850 may be accommodated in the receiving part 820. In particular, the experimental battery cell 850 may be disposed on a support plate and be accommodated in the receiving part 820. However, the experimental battery cell 850 alone may be accommodated in the receiving part 820. In FIG. 8, three experimental battery cells 850 are shown. But less than three or more than three experimental battery cells 850 may be accommodated in the receiving part 820.

In embodiments, a thermal insulator is interposed between one experimental battery cell 850 and another experimental battery cell 850. Additionally or alternatively, a thermal insulator may be interposed between the experimental battery cell 850 and the design adjustment part 830 and/or between the fixing part 822 and the experimental battery cell 850.

The design adjustment part 830 may adjust the design environment of the experimental battery cell 850. For example, the design adjustment part 830 may adjust the design environment corresponding to the control parameters provided in the experimental design data. Here, the experimental design data may indicate a design environment for the experimental battery module including an experimental battery cell. Additionally, the experimental battery module may be a virtual battery module that can be implemented with the experimental design data and may be assumed to accommodate an experimental battery cell.

In an embodiment, the parameters may include information regarding the stiffness of the end plate (EPS), the compression force (CF), and the thickness of the thermal insulator (HST). The design adjustment part 830 may include a load measurement unit 832, a stiffness adjustment unit 834, a thickness measurement unit 836, and a compression adjustment unit 838. The load measurement unit 832 may measure the load applied to the experimental battery cell 850 accommodated in the receiving part 820. The load measured by the load measurement unit 832 may be associated with the swelling force of the experimental battery cell 850. The stiffness adjustment unit 834 may adjust the stiffness of both ends of the experimental battery cell 850. For example, the stiffness adjustment unit 834 may adjust the stiffness of both ends of the experimental battery cell 850 by adjusting the elastic coefficient of a spring. The stiffness adjustment unit 834 may be associated with the stiffness of the end plate of the experimental battery module. The thickness measurement unit 836 may measure the thickness change of the experimental battery cell 850 that expands and contracts as it is charged and discharged. For example, the thickness measurement unit 836 may measure the thickness of the experimental battery cell 850 by using a linear gauge. In addition, the information about the thickness of the thermal insulator may be determined by changing the type and thickness of the thermal insulator disposed between the experimental battery cells 850 and between the experimental battery cell 850 and the experiment equipment 800.

By using the experiment equipment 800 described above, it is possible to obtain charge/discharge data for a battery cell having a design environment corresponding to the parameters affecting the battery module and the battery cell without directly implementing the design environment with a battery module and/or battery cell, thereby reducing the cost of manufacturing a battery module or the like. In addition, charge/discharge data of the experimental battery cell 850 may be obtained while readily adjusting factors that apply mechanical stress to the experimental battery cell 850.

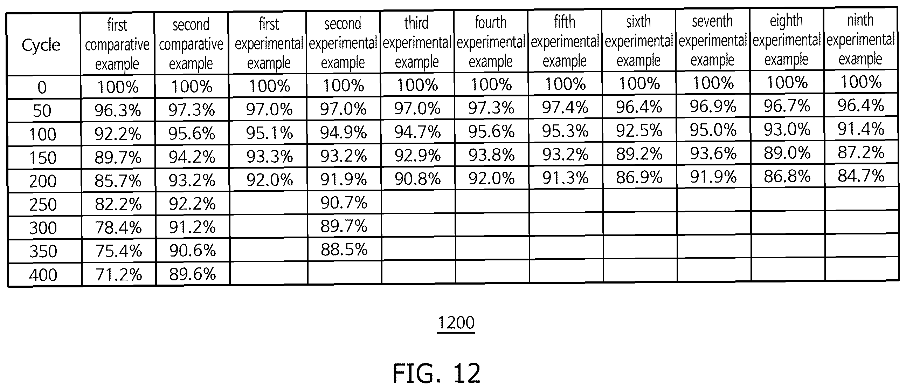

FIG. 11 is a graph and table showing control parameters used in multiple experimental examples of the present disclosure. FIG. 12 is a table showing experiment results for multiple experimental examples of the present disclosure.

The table in FIG. 11 shows the control parameters for each of multiple experimental examples. The graph in FIG. 11 shows the control parameters for each of multiple experimental examples in diagram form. The graph in FIG. 11 may represent the control parameters, with the stiffness of the end plate of the experimental battery module as the X-axis, the compression force as the Y-axis, and the thickness of the thermal insulator (heat shield) as the Z-axis. In the graph of FIG. 11, T1 to T9 may refer to experimental examples 1 to 9.

By arranging an experimental battery cell in the experiment equipment (e.g., experiment equipment 800 in FIG. 8) and manipulating the design adjustment part (e.g., design adjustment part 830 in FIG. 8), the design environment may be adjusted. Each of the multiple experimental examples is a case where the design environment is varied. For example, the stiffness adjustment unit of the design adjustment part may be used to adjust the design corresponding to the stiffness of the end plate of the corresponding battery module. As another example, the compression adjustment unit of the design adjustment part may be used to adjust the design corresponding to the compression force of the corresponding battery module. As another example, the thickness of the thermal insulator may be adjusted by changing the thickness and type of the thermal insulator contacts the experimental battery cell.

Referring to the table in FIG. 11, in the first experimental example, the rigidity of the end plate is about 5 kN/mm, the compression force is about 1 kN, and the thickness of the thermal insulator is about 1.2 mm. The control parameters of each of the second to ninth experimental examples are shown in the table of FIG. 11. Here, "rigid" may indicate that no elastic structure such as a spring is placed in the stiffness adjustment unit of the experiment equipment, and "rigid" cases may indicate that the stiffness of the end plate is about 100 kN/mm.

In general, for a battery cell accommodated in the battery module, the thickness of the thermal insulator may be about 1 mm to 4 mm, the stiffness of the end plate of the battery module may be about 0 kN/mm to 100 kN/mm, and the compression force may be about 0 kN to 100 kN. To facilitate the interpretation of charge/discharge data, it may be desirable for the information included in the control parameters to be at both ends or in the middle of the values that can generally be determined. Hence, 5 kN/mm, 25 kN/mm, and 100 kN/mm may be selected as the values of the stiffness of the end plate of the battery module; 1 kN, 4 kN, and 10 kN may be selected as the values of the compression force; 1.2 mm, 2.4 mm and 3.6 mm may be selected as the values of the thickness of the thermal insulator. in the depicted embodiment, a total of nine cases are provided from the combinations of the selected values, and the multiple experimental examples may correspond respectively to the nine cases. The graph in FIG. 11 confirms that the multiple experimental examples are arranged at opposite ends or in the middle of the values.

With reference to FIG. 12, it is possible to identify the experiment results for each of the multiple experimental examples described with reference to FIG. 11. Additionally, experiment results for a first comparative example and second comparative example may also be provided. The first comparative example is an actual experimental battery module that is the result of a direct experiment. In the first comparative example, the stiffness of the end plate of the experimental battery module is about 100 kN/mm, the compression force of the experimental battery module is about 4 kN, and the thickness of the thermal insulator is about 1.2 mm. The second comparative example shows the experiment results for one experimental battery cell that was not accommodated in a battery module.

In the first and second comparative examples and first to ninth experimental examples, the SOH is measured once every preset number of charge/discharge cycles. The table in FIG. 12 may show the results of measuring the SOH for every 50 charge/discharge cycles. In the first and third to ninth experimental examples, measurements were performed until 200 charge/discharge cycles, and in the second experimental example, measurements were performed after 350 charge/discharge cycles. In the first and second comparative examples, measurements were performed after 400 charge/discharge cycles. Referring to the table in FIG. 12, it can be seen that the SOH of the experimental battery cell decreases as the number of charge/discharge cycles increases. That is, as charge and discharge cycles are performed on the experimental battery cell, the experimental battery cell ages.

Referring to the experiment results in FIG. 12, it can be seen that the SOH of the experimental battery cell decreases in the case where the stiffness of the end plate increases, the compression force increases, and the thickness of the thermal insulator decreases. That is, the stiffer the end plate, the greater the compression force, and the thinner the thermal insulator, the faster the experimental battery cell may age. Based on these experiment results, the correlation between the control parameters and the degree of aging of the battery cell may be determined.

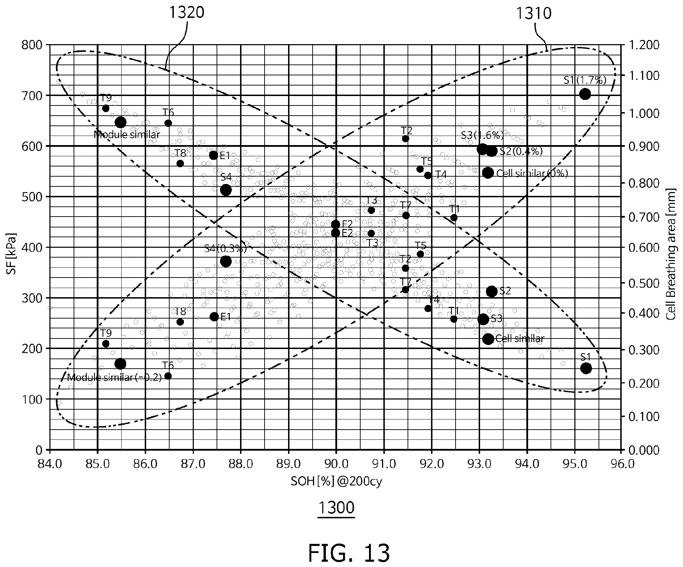

To more specifically determine the correlation between the control parameters and the degree of aging of the battery cell, the design environments corresponding to the first to ninth experimental examples may be further refined to generate experimental design data and charge/discharge data of the experimental battery cell. The method of producing more experiment results and the correlation between control parameters and aging information of a battery cell are described in detail with reference to FIG. 13.

FIG. 13 is a graph 1300 showing the correlation between battery aging information and the breathing space size. The first to ninth experimental examples described with reference to FIGS. 11 and 12 were designed with three control parameters divided into three levels. For example, 5 kN/mm, 25 kN/mm and 100 kN/mm were selected for the value of the stiffness of the end plate, 1 kN, 4 kN and 10 kN were selected for the value of the compression force, and 1.2 mm, 2.4 mm and 3.6 mm were selected for the value of the thickness of the thermal insulator. More specifically than the first to ninth experimental examples, 5 kN/mm, 15 kN/mm, 25 kN/mm, 50 kN/mm and 100 kN/mm were selected for the stiffness of the end plate, 1 kN, 1.75 kN, 2.5 kN, 3.25 kN, 4 kN, 5.5 kN, 7 kN, 8.5 kN and 10 kN were selected for the compression force, and 1.2 mm, 1.5 mm, 1.8 mm, 2.1 mm, 2.4 mm, 2.7 mm, 3 mm, and 3.6 mm were selected for the thickness of the thermal insulator. A total of 405 design environments may be derived from the combinations of the selected values. Based on the experiment results of the first to ninth experimental examples, simulations are performed for a total of 405 cases by using Taguchi sensitivity analysis. Using the simulation results, the size of the breathing space of the experimental battery cell and the swelling force of the experimental battery cell according to the SOH state after 200 charge/discharge cycles was as shown in FIG. 13.

The size of the breathing space may be related to the degree of expansion of the battery cell as the battery cell is charged and discharged. For example, the battery cell expands and contracts as it is repeatedly charged and discharged, and the breathing space size can indicate the change in thickness of the expanded battery cell and the contracted battery cell. The size of the breathing space of the experimental battery cell may be calculated by measuring the thickness of the contracted experimental battery cell and measuring the thickness of the expanded experimental battery cell using the thickness measurement unit of the experiment equipment.

The swelling force of a battery cell may indicate the force per unit area that occurs when the charged battery cell expands. The swelling force of the experimental battery cell may be measured using the load measurement unit of the experiment equipment. Additionally or alternatively, the swelling force of the experimental battery cell may be calculated based on the stiffness of the end plate, the compression force, the thickness of the thermal insulator, and the like.

The graph 1300 in FIG. 13 includes first data 1310 and second data 1320. The first data 1310 is the breathing space of the experimental battery cell and the aging information of the experimental battery cell based on simulation results of the 405 cases. In the first data 1310, the X-axis indicates the SOH of the battery cell after 200 charge/discharge cycles, and the Y-axis indicates the breathing space of the experimental battery cell. Referring to the first data 1310, it may be seen that the larger the breathing space size of the experimental battery cell, the better the SOH of the experimental battery cell after 200 charge/discharge cycles. That is, the data shows that the larger the breathing space of a battery cell, the slower the aging of the battery cell.

The second data 1320 is the swelling force of the battery cell and the aging information of the battery cell based on simulation results of the 405 cases. For the second data 1320, the X-axis indicates the SOH of the battery cell with 200 charge/discharge cycles, and the Y-axis may indicate the swelling force of the battery cell. Referring to the second data 1320, it may be identified that the greater the swelling force of the battery cell, the smaller the SOH of the battery cell that has undergone 200 charge/discharge cycles. That is, the greater the swelling force of the battery cell, the faster the battery cell may age.

T1 to T9 shown in FIG. 13 may indicate the first to ninth experimental examples. S1 to S4 indicate the results of experiments with actual experimental battery modules that are based on four of the 405 simulated cases. Here, the value in parentheses indicates the error between the actual experiment result and the simulation result. "Module similar" indicates the experiment results for the first comparative example, and "Cell similar" indicates the experiment results for the second comparative example. E1 indicates an experiment for a case where the stiffness of the end plate is 25 kN/mm, the compression force is 10 kN, and the thickness of the thermal insulator is 2.4 mm. In experiment E1, the SOH of the battery cell that has undergone 200 charge/discharge cycles is 87.5 percent. E2 indicates an experiment for a case where the stiffness of the end plate is 25 kN/mm, the compression force is 4 kN, and the thickness of the thermal insulator is 2.4 mm. In experiment E2, the SOH of the battery cell that has undergone 200 charge/discharge cycles is 90 percent.

As described above, the correlation between the size of the breathing space of the battery cell included in the battery module and the aging information of the battery may be determined. Also, the correlation between the swelling force and aging information of the battery cell included in the battery module may be determined. When the design environment corresponding to the control parameters is adjusted by using these correlations, the aging information of the battery according to the size of the breathing space of the battery cell may be predicted.

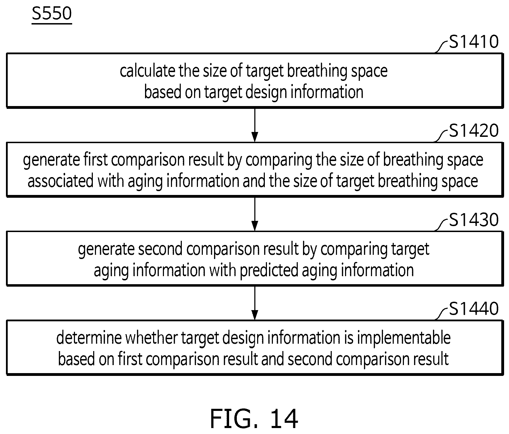

FIG. 14 is a detailed flowchart of the step S550 for determining whether target design information is feasible according to an embodiment of the present disclosure. The determination part (e.g., determination part 130 in FIG. 1) may be used to determine whether the target design information is feasible based on the target design information and predicted aging information (S550).

In an embodiment, the step of determining whether the target design information is feasible may be initiated by calculating the size of the target breathing space based on the target design information (S1410). The target design information may include cell specification information for the target battery cell and module specification information for the target battery module. The size of the target breathing space may be calculated based on the cell specification information and the module specification information. The information about the specification of the battery cell and information about the specification of the battery module may be stored in a specification database. The specification database may include information about mechanical stresses that may be present for each battery cell specification and each battery module specification. For example, the specification database may include, for the specification of a specific battery cell and the specification of a specific battery module, information about the stiffness of the end plate of the specific battery module, the compression force of the specific battery module, the thickness of the thermal insulator of the specific battery module, and the swelling force of the specific battery cell. The determination part may extract information related to the control parameters for the specification of the target battery cell and the specification of the target battery module included in the target design information from the specification database. Then, the determination part may calculate the size of the breathing space of the target battery cell based on the information associated with the extracted control parameters.

In embodiments, the battery aging predictor (e.g., battery aging predictor 120 in FIG. 1) may predict aging of the target battery cell based on the target design information by using the cell aging prediction model. The battery aging predictor may calculate the size of the breathing space associated with the predicted aging information. And the determination part may generate a first comparison result by comparing the size of the breathing space associated with the predicted aging information and the size of the target breathing space (S1420). The determination part may also generate a second comparison result by comparing the target aging information with the predicted aging information (S1430). The target aging information may be included in the target design information and may indicate aging information desired for the target battery cell.

The determination part may determine whether the target design information is feasible based on the first comparison result and the second comparison result (S1440). For example, if the size of the breathing space associated with the predicted aging information is less than or equal to the size of the target breathing space, and the target aging information is greater than or equal to the predicted aging information, the determination part may determine that the target design information is feasible. If the size of the breathing space associated with the predicted aging information is greater than the size of the target breathing space, or the target aging information is less than the predicted aging information, the determination part may determine that the target design information is not feasible.

The flowcharts in FIGS. 5, 6, and 14 and related descriptions are examples of the present disclosure, but the scope of the present disclosure is not limited to the flowcharts in FIGS. 5, 6, and 14 and the related descriptions above. For example, in the flowcharts and/or the descriptions described above, one or more steps may be added/changed/deleted, the order of one or more steps may be changed, and one or more steps may be performed simultaneously.

FIG. 15 shows an example of an optimal battery module design interface 1500 according to an embodiment of the present disclosure. The optimal battery module design interface 1500 may include a target information input interface 1510, a determination result output interface 1520, and a determination request button 1530.

The user may input target design information through the target information input interface 1510. The target design information may include cell specification information for the target battery cell, module specification information for the target battery module, target aging information, target charging speed, target number of charge/discharge cycles, and the like. Referring to FIG. 15, information regarding the material, width, thickness, and depth of the battery cell may be input as cell specification information through the target information input interface 1510. Information regarding the structure of the battery module (e.g., number of battery cells arranged in series, number of battery cells arranged in parallel, or the like), the type, number and thickness of the end cell spacer, the type, number and thickness of the thermal insulator disposed between the battery cells, the rigidity and compression force of the battery module, and the like may be input as module specification information through the target information input interface 1510.

After the information required for the target information input interface 1510 is input, in response to receiving an input for the determination request button 1530, the determination result output interface 1520 may output a determination result based on whether the target design information is feasible. The determination result output interface 1520 may output the size of the target breathing space 1528 calculated based on the target design information. Additionally, the determination result output interface 1520 may output aging information of the target battery cell 1529 predicted based on the target design information.

The determination result output interface 1520 can also output the sizes of multiple target breathing spaces 1528. In response to the output, the determination result output interface 1520 may output predicted aging information 1526 and the size of the breathing space 1529 associated with the predicted aging information. For example, the sizes of multiple target breathing spaces 1528 may be output in response to the swelling force of the target battery cell. The predicted aging information 1526 and the size of the breathing space 1529 associated with the predicted aging information may be output in response to the swelling force of the target battery cell being the basis from which the sizes of the multiple target breathing spaces 1528 are derived.

In an embodiment, the determination result output interface 1520 may output a first result of comparison between the size of the target breathing space 1528 and the size of the breathing space associated with the predicted aging information 1529. For example, if the size of the target breathing space 1528 is less than the size of the breathing space associated with the predicted aging information 1529, a result indicating that the breathing space size is insufficient may be output (e.g., "insufficiency" in FIG. 15). Additionally, if the size of the target breathing space 1528 is greater than or equal to the size of the breathing space associated with the predicted aging information 1529, a result indicating that the breathing space size is sufficient may be output (e.g., "sufficiency" in FIG. 15).

In an embodiment, the largest value of the predicted aging information 1529 among the data for which a result indicating that the breathing space size is sufficient is output may be provided as the representative value 1522 of the aging information. The second result of comparison 1524 between the representative value 1522 of the aging information and the target aging information may be output. For example, if the representative value 1522 of the aging information is less than the target aging information, the determination result output interface 1520 may output a determination result indicating that the target design information is not feasible (e.g., "fail" in FIG. 15). If the representative value 1522 of the aging information is greater than or equal to the target aging information, the determination result output interface 1520 may output a determination result indicating that the target design information is feasible.

As described above, by inputting target design information through the optimal battery module design interface 1500 and comparing the target aging information with the predicted aging information, whether the target design information is actually feasible may be readily determined. In addition, by inputting changed target design information, whether various target design information is actually feasible may be determined, and it is possible to obtain optimal battery module design information among various target design information.

Although the present disclosure has been described above with respect to embodiments thereof, the present disclosure is not limited thereto.

Embodiments are set out in the following clauses:
1. A method of designing a battery module, the method comprising:
   receiving target design information about a target battery module that includes a target battery cell;
   predicting aging of the target battery cell based on the target design information by using a cell aging prediction model that correlates a design of a battery module including a battery cell and aging of the battery cell; and
   determining whether the target design information is feasible based on the target design information and the predicted aging of the battery cell.
2. The method of clause 1, wherein the target design information includes cell specification information about the target battery cell and module specification information about the target battery module, and
   wherein determining whether the target design information is feasible comprises:
   calculating a size of a target breathing space based on the cell specification information and the module specification information, and
   determining whether the target design information is feasible based on the size of the target breathing space and the predicted aging of the battery cell.
3. The method of clause 2, wherein the target design information further includes target aging information about the target battery cell, and
   wherein determining whether the target design information is feasible based on the size of the target breathing space and the predicted aging of the battery cells comprises determining whether the target design information is feasible based on the size of the target breathing space, the target aging information, and the predicted aging of the battery cell.
4. The method of clause 3, wherein determining whether the target design information is feasible based on the size of the target breathing space, the target aging information, and the predicted aging of the battery cell comprises:
   generating a first comparison result by comparing the size of the breathing space associated with the predicted aging of the battery cell and the size of the target breathing space,
   generating a second comparison result by comparing the target aging information with the predicted aging of the battery cell, and
   determining whether the target design information is feasible based on the first comparison result and the second comparison result.
5. The method of cany preceding clause, further comprising:
   receiving experimental design data and charge/discharge data of an experimental battery cell corresponding to the experimental design data, wherein the experimental design data represents a design environment for an experimental battery module including the experimental battery cell; and
   generating the cell aging prediction model based on the experimental design data and the charge/discharge data.
6. The method of clause 5, wherein the experimental design data includes parameters affecting the lifespan of the experimental battery cell, and
   wherein the parameters include control parameters that are adjusted in the design environment and operating parameters that are dependent on the control parameters.
7. The method of clause 6, wherein the control parameters are related to at least one of the stiffness of an end plate of the experimental battery module, a compression force, and the thickness of a thermal insulator of the experimental battery module.
8. The method of clause 6 or clause 7, wherein the operating parameters are related to at least one of a swelling force of the experimental battery module, DC internal resistance of the experimental battery cell, DC internal resistance of the experimental battery module, a temperature deviation of the experimental battery cell, and a temperature deviation of the experimental battery module.
9. The method of any of clauses 6 to 8, wherein the control parameters and the operating parameters are distinguished based on the degree to which they affect the lifespan of the experimental battery cell.
10. The method of any of clauses 6 to 9, wherein generating the cell aging prediction model comprises calculating aging information of the experimental battery cell according to the control parameters based on the charge/discharge data.
11. The method of clause 10, wherein generating the cell aging prediction model comprises:
   calculating the size of a breathing space of the experimental battery cell according to the control parameters based on the charge/discharge data, and
   calculating a correlation between the size of the breathing space of the experimental battery cell and the aging information of the experimental battery cell.
12. The method of any of clauses 5 to 11, wherein the charge/discharge data is generated by experimental equipment that includes:
   a receiving part to accommodate the experimental battery cell;
   a compression adjustment unit to control a compression force applied to the experimental battery cell;
   a stiffness adjustment unit to control stiffness of opposite ends of the experimental battery cell; and
   a thickness measurement unit to measure a thickness change of the experimental battery cell.
13. The method of any preceding clause, wherein the predicted aging of the battery cell includes state-of-health (SOH) information of the target battery cell that has undergone charge/discharge cycles.
14. The method of any of clauses 2 to 13, wherein the size of the target breathing space is associated with a degree of expansion of the target battery cell as it is charged and discharged.
15. A battery module designed using the optimal battery module design method according to any preceding clause.
16. A system for designing an optimal battery module, the system comprising:
   at least one processor configured to read out and execute instructions stored in at least one memory to thereby cause the system to function as:
   a target information receiver configured to receive target design information about a target battery module including a target battery cell;
   a battery aging predictor configured to predict aging of the target battery cell based on the target design information by using a cell aging prediction model that correlates a design of a battery module including a battery cell and aging of the battery cell; and
   a determination part configured to determine whether the target design information is feasible based on the target design information and the predicted aging of the target battery cell.
17. The system of clause 16, wherein the target design information includes cell specification information about the target battery cell and module specification information about the target battery module, and
   wherein the determination part is further configured to calculate a size of a target breathing space based on the cell specification information and the module specification information, and the determination part is configured to determine whether the target design information is feasible based on the size of the target breathing space and the predicted aging of the battery cell.
18. The system of clause 17, wherein the target design information further includes target aging information about the target battery cell, and
   wherein determining whether the target design information is feasible based on the size of the target breathing space and the predicted aging of the battery cell comprises determining whether the target design information is feasible based on the size of the target breathing space, the target aging information, and the predicted aging of the battery cell.
19. The system of clause 18, wherein determining whether the target design information is feasible comprises:
   generating a first comparison result by comparing the size of the breathing space associated with the predicted aging of the battery cell and the size of the target breathing space;
   generating a second comparison result by comparing the target aging information with the predicted aging of the battery cell; and
   determining whether the target design information is feasible based on the first comparison result and the second comparison result.
20. The system of any of clauses 16 to 19, further comprising:
   an experimental data receiver configured to receive experimental design data and charge/discharge data of an experimental battery cell corresponding to the experimental design data, wherein the experimental design data represents a design environment for an experimental battery module including the experimental battery cell; and
   an aging prediction model generator configured to generate the cell aging prediction model based on the experimental design data and the charge/discharge data.

## Claims

1. A method of designing a battery module, the method comprising:
receiving target design information about a target battery module 140 that includes a target battery cell;
predicting aging of the target battery cell based on the target design information by using a cell aging prediction model that correlates a design of a battery module 30 including a battery cell 300 and aging of the battery cell 300; and
determining whether the target design information is feasible based on the target design information and the predicted aging of the target battery cell.

2. The method as claimed in claim 1, wherein the target design information includes cell specification information about the target battery cell and module specification information about the target battery module 140, and
wherein determining whether the target design information is feasible comprises:
calculating a size of a target breathing space based on the cell specification information and the module specification information, and
determining whether the target design information is feasible based on the size of the target breathing space and the predicted aging of the target battery cell.

3. The method as claimed in claim 2, wherein the target design information further includes target aging information about the target battery cell, and
wherein determining whether the target design information is feasible based on the size of the target breathing space and the predicted aging of the target battery cells comprises determining whether the target design information is feasible based on the size of the target breathing space, the target aging information, and the predicted aging of the target battery cell.

4. The method as claimed in claim 3, wherein determining whether the target design information is feasible based on the size of the target breathing space, the target aging information, and the predicted aging of the target battery cell comprises:
generating a first comparison result by comparing the size of the breathing space associated with the predicted aging of the target battery cell and the size of the target breathing space,
generating a second comparison result by comparing the target aging information with the predicted aging of the target battery cell, and
determining whether the target design information is feasible based on the first comparison result and the second comparison result.

5. The method as claimed in any preceding claim, further comprising:
receiving experimental design data and charge/discharge data of an experimental battery cell 850 corresponding to the experimental design data, wherein the experimental design data represents a design environment for an experimental battery module including the experimental battery cell 850; and
generating the cell aging prediction model based on the experimental design data and the charge/discharge data.

6. The method as claimed in claim 5, wherein the experimental design data includes parameters affecting the lifespan of the experimental battery cell 850, and
wherein the parameters include control parameters that are adjusted in the design environment and operating parameters that are dependent on the control parameters.

7. The method as claimed in claim 6, wherein the control parameters are related to at least one of the stiffness of an end plate of the experimental battery module, a compression force, and the thickness of a thermal insulator of the experimental battery module.

8. The method as claimed in claim 6 or claim 7, wherein the operating parameters are related to at least one of a swelling force of the experimental battery module, DC internal resistance of the experimental battery cell 850, DC internal resistance of the experimental battery module, a temperature deviation of the experimental battery cell 850, and a temperature deviation of the experimental battery module.

9. The method as claimed in any of claims 6 to 8, wherein the control parameters and the operating parameters are distinguished based on the degree to which they affect the lifespan of the experimental battery cell 850.

10. The method as claimed in any of claims 6 to 9, wherein generating the cell aging prediction model comprises calculating aging information of the experimental battery cell 850 according to the control parameters based on the charge/discharge data.

11. The method as claimed in claim 10, wherein generating the cell aging prediction model comprises:
calculating the size of a breathing space of the experimental battery cell 850 according to the control parameters based on the charge/discharge data, and
calculating a correlation between the size of the breathing space of the experimental battery cell 850 and the aging information of the experimental battery cell 850.

12. The method as claimed in any of claims 5 to 11, wherein the charge/discharge data is generated by experimental equipment 800 that includes:
a receiving part 820 to accommodate the experimental battery cell 850;
a compression adjustment unit 838 to control a compression force applied to the experimental battery cell 850;
a stiffness adjustment unit 834 to control stiffness of opposite ends of the experimental battery cell 850; and
a thickness measurement unit 836 to measure a thickness change of the experimental battery cell 850.

13. The method as claimed in any preceding claim, wherein the predicted aging of the target battery cell includes state-of-health (SOH) information of the target battery cell that has undergone charge/discharge cycles.

14. The method as claimed in claim 2, or any of claims 3 to 13 when dependent on claim 2, wherein the size of the target breathing space is associated with a degree of expansion of the target battery cell as it is charged and discharged.

15. A system for designing an optimal battery module, the system comprising:
at least one processor configured to read out and execute instructions stored in at least one memory to thereby cause the system to function as:
a target information receiver 110 configured to receive target design information about a target battery module 140 including a target battery cell;
a battery aging predictor 120 configured to predict aging of the target battery cell based on the target design information by using a cell aging prediction model that correlates a design of a battery module 30 including a battery cell 300 and aging of the battery cell 300; and
a determination part 130 configured to determine whether the target design information is feasible based on the target design information and the predicted aging of the target battery cell.
